# EUROPÄISCHE PATENTANMELDUNG

(11) **EP 2 415 547 A2**
(43) Veröffentlichungstag der Anmeldung: **08.02.2012**
(21) Anmeldenummer: 11172533.9
(22) Anmeldetag: 04.07.2011
(51) Int. Cl.: B23K 1/002

(54) **Lötkopf und Verfahren zum induktiven Löten**

(30) Priorität: 04.08.2010 DE 102010033361
(71) Anmelder: SCHOTT Solar AG, 55122 Mainz (DE)
(72) Erfinder: Makacs, Antal, 99441 Großschwabenheim (DE); Weidl, Roland, 07646 Bollberg (DE)

(57) **Zusammenfassung**

Die Erfindung betrifft einen Lötkopf für eine Induktionslötvorrichtung zum Anlöten eines Kontaktbandes auf eine Solarzelle sowie ein Lötverfahren unter Verwendung des Lötkopfes. Der Lötkopf weist eine Lötseite auf, mit welcher der Lötkopf während des Lötprozesses auf die zu lötende Stelle aufgesetzt wird, eine Induktorschleife mit einem Zuleitungsbereich und einem auf der Lötseite angeordneten Auskoppelbereich, einen Grundkörper aus einem elektrisch nicht leitfähigen Material und ein Befestigungsmittel, mit welchem der Grundkörper an der Induktorschleife fixiert ist, wobei der Auskoppelbereich der Induktorschleife auf der Lötseite frei liegt und der Grundkörper auf der Lötseite ein oder mehrere Distanzelemente aufweist, welche außerhalb des Auskoppelbereiches angeordnet sind und über den Auskoppelbereich der Induktorschleife hinausragen.

## Beschreibung

Die vorliegende Erfindung betrifft einen Lötkopf für eine Vorrichtung zum induktiven Löten sowie ein Verfahren zum Anlöten eines Kontaktbandes.

Bei der Fertigung von Dünnschichtsolarmodulen wird nach der Fertigung des so genannten Rohmoduls, welches das Substrat, das photovoltaische Schichtsystem sowie die Rückelektrodenschicht umfasst, die elektrische Kontaktierung hergestellt, wobei in der Regel die Rückelektrodenschicht der so genannten Abgriffzellen des Dünnschichtsolarmoduls durch zwei oder mehr metallische Anschlussbänder kontaktiert wird, welche den erzeugten Strom abführen. An die elektrische Kontaktierung durch die metallische Anschlussbänder sind hohe Ansprüche gestellt, da das Dünnschichtsolarmodul in der späteren Anwendung im Außenbereich über einen langen Zeitraum vom mindestens 20 Jahren starken Temperaturschwankungen und Wettereinflüssen ausgesetzt sein kann und in dieser Zeit wartungsfrei arbeiten soll.

Die Befestigung der metallischen Anschlussbänder an der Rückelektrodenschicht kann zum einen durch Haftkleben mit einem leitfähigen Kleber erfolgen, bevorzugt erfolgt sie aber durch eine Lötverbindung, da mit den Haftklebeverfahren in der Regel keine ausreichende Langzeitstabilität der Verbindung erreicht wird.

Eine Lötverbindung der metallischen Anschlussbänder ermöglicht im Allgemeinen eine zuverlässigere Kontaktierung mit besserer Langzeitstabilität, es besteht jedoch insbesondere bei Dünnschichtsolarmodulen die Gefahr, dass die Rückelektrodenschicht und das darunter liegende photovoltaische Schichtsystem, welches nur eine Dicke vom einigen µm aufweist, durch den Lötprozess thermisch geschädigt werden. Es kann insbesondere zu so genannten "Durchlötern" kommen, welche auf der Vorderseite des Dünnschichtmoduls sichtbar sind und welche einen optischen Mangel darstellen und Ausschuss verursachen. Ein Durchlöter kann aber auch einen elektrischen Kurzschluss von Frontelektrodenschicht und Rückelektrodenschicht bewirken, welcher die Leistung des Dünnschichtmoduls verringert. Werden zum Vermeiden von thermischen Schädigungen die Lötleistung und/oder die Lötdauer und damit die eingebrachte Energiemenge verringert, so kann es zu einer kalten Lötstelle kommen, welche keine dauerhaft stabile mechanische Festigkeit und keinen dauerhaft sicheren Kontakt herstellt. Da der gesamte Schichtaufbau eines Dünnschichtmoduls normalerweise nur eine Dicke von ca. 2 bis 10 µm aufweist, besitzt der Rückkontakt nur eine sehr geringe Wärmekapazität, so dass sich schon kleine Schwankungen im Lötprozess extrem auf das Lötergebnis auswirken. Das Anlöten von metallischen Anschlussbändern auf ein Rohmodul stellt daher höchste Anforderungen an die Stabiltät und die Reproduzierbarkeit des Lötprozesses.

Des Weiteren sind an die Geschwindigkeit des Lötprozesses hohe Anforderungen gestellt. Jedes Lötband wird auf dem Dünnschichtsolarmodul abhängig von der Modulgröße mit einer Anzahl von typischerweise 20 Punktlötungen befestigt. Um akzeptable Gesamtlötzeiten je Modul zu erreichen, sollte eine einzelne Lötung nicht länger als eine Sekunde dauern.

Aus dem Stand der Technik sind neben dem klassischen Kontaktlöten, bei dem die Wärme durch eine Lötspitze konvektiv eingebracht wird, bereits berührungslose induktive Lötverfahren bekannt, wobei die Energie zum Aufschmelzen des Lotes in diesem Fall der Lötstelle durch ein elektromagnetisches Hochfrequenzfeld zugeführt wird, welches die Lötstelle durch die induzierten Ströme erwärmt. Im Stand der Technik wird ein induktives Lötverfahren für die elektrische Kontaktierung von Solarzellen zum Beispiel beschrieben in der EP 2103373 A1, wobei in diesem Fall keine Dünnschichtsolarzellen, sondern kristalline Solarzellen auf der Basis eines Si-Wafers kontaktiert werden. Die Induktorschleife weist hier eine U-förmige Form mit wellenförmig geformten Schenkeln auf. Es können mehrere Stellen parallel gelötet werden. Während des Lötprozesses wird das anzulötende metallische Anschlussband über Niederhalter an die Solarzelle gedrückt.

Ein weiteres induktives Lötverfahren für Solarzellen ist in der EP 1748495 A1 offenbart, wobei der Induktor in einer Ausführungsform gleichzeitig als beweglicher Niederhalter ausgebildet ist, welcher während des Lötprozesses auf die Lötstelle aufgesetzt wird. In einer Ausführungsform ist zwischen Induktor und dem metallischen Lötband eine Wärmeisolierplättchen einer Dicke von vorzugsweise 2 mm angeordnet.

Ein weiteres induktives Lötverfahren für Solarzellen ist in der DE 10335438 B4 beschrieben, wobei der Induktor hier ebenfalls als Niederhalter ausgebildet ist und wobei mit einer Andrückplatte, welche sich zwischen Induktorschleife und Lötstelle befindet, eine Anpresskraft auf die Lötstelle aufgebracht wird.

Die Vorrichtungen und Verfahren aus dem Stand der Technik sind jedoch für das induktive Löten von metallischen Anschlussbändern auf Dünnschichtsolarmodulen nicht geeignet. Bei frei aufgehängter Induktionsspule ohne relative Fixierung zur Lötstelle wird im Allgemeinen kein stabiles Ergebnis des Lötprozesses erreicht, da kein gleich bleibender Abstand zur Lötstelle eingehalten werden kann. Befindet sich hingegen zwischen Induktorschleife und Lötstelle ein Niederhalter, so kommt es durch Verschleiss und Verunreinigungen des Niederhalters zum Beispiel durch Anlagerungen von verdampfendem Flussmittel ebenfalls zu einer Veränderung des Abstands zwischen Induktionsspule und Lötstelle, so dass kein stabiler Lötprozess erreicht wird.

Die Aufgabe der Erfindung besteht daher in der Bereitstellung eines Lötkopfes für eine Induktionslötvorrichtung zum induktiven Löten eines metallischen Kontaktbandes auf ein Dünnschichtsolarmodul, welcher eine zuverlässige mechanische und elektrische Lötverbindung sicherstellt, ohne jedoch die Halbleiterschicht und die Frontelektrode zu schädigen, und welche einen schnellen, reproduzierbaren und unter Dauerbetrieb stabilen Lötprozess sicherstellt. Die Aufgabe besteht des weiteren in der Bereitstellung eines Verfahrens zum Löten von metallischen Kontaktbändern auf Dünnschichtsolarmodule.

Die Aufgabe wird gelöst durch die unabhängigen Ansprüche. Bevorzugte Ausführungsformen sind in den abhängigen Ansprüchen ausgeführt.

Der erfindungsgemäße Lötkopf für eine Induktionslötvorrichtung umfasst eine Lötseite, mit welcher der Lötkopf während des Lötprozesses auf die zu lötende Stelle aufgesetzt wird, eine Induktorschleife mit einem Zuleitungsbereich und einem auf der Lötseite angeordneten Auskoppelbereich, einen Grundkörper aus einem elektrisch nicht leitfähigen Material und ein Befestigungsmittel, mit welchem der Grundkörper an der Induktorschleife fixiert ist, dadurch gekennzeichnet, dass der Auskoppelbereich der Induktorschleife auf der Lötseite frei liegt und dass der Grundkörper auf der Lötseite ein oder mehrere Distanzelemente aufweist, welche außerhalb des Auskoppelbereiches angeordnet sind und über den Auskoppelbereich der Induktorschleife hinausragen.

Die Erfinder haben erkannt, dass für einen induktiven Lötprozess, welcher eine zuverlässige, elektrische Kontaktierung sicherstellen soll, ohne die Halbleiterschicht und die Frontelektrode zu schädigen, und welcher einen schnellen, reproduzierbaren und unter Dauerbetrieb stabilen Lötprozess sicherstellen soll, der Abstand zwischen dem Auskoppelbereich der Induktorschleife und der Oberfläche der zu lötenden Probe sehr präzise eingehalten werden muss, was bei den Lötköpfen gemäß Stand der Technik nicht sichergestellt ist. Wird der erfindungsgemäße Lötkopf mit der Lötseite auf die zu lötende Stelle aufgesetzt, so wird durch das oder die Distanzelemente, welche auf der Lötseite außerhalb des Auskoppelbereiches angeordnet sind, ein Kontakt mit der Oberfläche der zu lötenden Probe hergestellt, wodurch ein sehr präziser Abstand zwischen dem Auskoppelbereich der Induktorschleife und der Oberfläche der zu lötenden Probe hergestellt wird. Im Auskoppelbereich liegt die Induktorschleife erfindungsgemäß frei, das bedeutet, es befindet sich zwischen dem Auskoppelbereich der Induktionsschleife und der Lötstelle kein Kontaktmaterial, welches in der Lötphase auf die Lötstelle aufgesetzt wird. Das hat zum einen den Vorteil, dass ein solches Kontaktmaterial auch nicht mit erwärmt werden muss und damit ein maximaler Energieanteil in die zu lötende Stelle eingekoppelt wird. Zum anderen kann es aber auch nicht zu einem Verschleiss eines solchen Kontaktmaterials kommen, welches sehr hohen thermischen und mechanischen Belastungen sowie einer Verschmutzung durch verdampfendes Flussmittel ausgesetzt ist. Desweiteren kann der Lötstelle durch ein Kontaktmaterial zwischen Auskoppelbereich und Lötstelle eine undefinierte Wärmemenge entzogen werden, da der Wärmeübergang zwischen Lötstelle und Kontaktmaterial zum Beispiel vom Anpressdruck sowie dem Verschmutzungszustand des Kontaktmaterials mit Flussmittel abhängig ist. Der erfindungsgemäße Lötkopf weist hingegen ein oder mehrere Distanzelemente auf, welche außerhalb des Auskoppelbereiches angeordnet sind und daher außerhalb der zu lötenden Stelle auf die Solarzelle aufgesetzt werden. Das oder die Distanzelemente werden daher thermisch deutlich weniger belastet und sind auch keinen Verschmutzungen durch verdamfendes Flussmittel ausgesetzt. Damit verringert sich auch ein Verschleiss der Distanzelemente und es kann eine dauerhaft stabiler Abstand zwischen dem Auskoppelbereich der Induktorschleife und der Oberfläche der zu lötenden Probe mit sichergestellt. Aufgrund der Tatsache, dass die Induktorschleife nur auf einer geringen Länge im Auskoppelbereich frei steht, können Probleme durch Schwingungen oder thermische Verformung der Induktorschleife, welche ebenfalls zu einem instabilen Lötprozess führen, vorteilhaft vermieden werden.

Der erfindungsgemäße Lötkopf ist in Verbindung mit einer Induktionslötvorrichtung einsetzbar, welche in der Regel eine Mittel- oder eine Hochfrequenz-Stromquelle sowie eine Kühlmittelversorgung umfasst. Des Weiteren umfasst die Induktionslötvorrichtung in der Regel eine Aufnahmevorrichtung für den Lötkopf, welche an einer mechanischen Verfahreinheit so angeordnet ist, dass der Lötkopf in den Bereich der Lötstelle gebracht werden kann und auf diese aufgesetzt werden kann. Um eine Schädigung der zu lötenden Stelle zu vermeiden, sind vorteilhaft ferner Mittel vorgesehen, welche ein schnelles aber kontrolliertes Aufsetzen des Lötkopfes auf die zu lötende Stelle sicherstellen.

Unter der Lötseite des Lötkopfes ist im Allgemeinen die Seite des Lötkopfes zu verstehen, auf welcher der Auskoppelbereich der Induktorschleife angeordnet ist. Erfindungsgemäß wird der Lötkopf mit dieser Lötseite auf die zu lötende Stelle aufgesetzt, so dass im Auskoppelbereich durch die Induktorschleife induktiv Energie in die zu lötenden Stelle eingekoppelt wird.

Die Induktorschleife weist einen Zuleitungsbereich auf, welcher dem Auskoppelbereich die Mittel- oder Hochfrequenz zuführt. In diesem Zuleitungsbereich ist die Induktorschleife in Richtung der Lötseite geführt und weist in der Regel zwei parallele Schenkel auf, so dass möglichst keine Spulenwirkung vorhanden ist und möglichst wenig Energie abgestrahlt wird. Die Induktorschleife kann der Lötseite im Zuleitungsbereich direkt zugeführt werden, also senkrecht zur Lötseite verlaufen, oder aber auch schräg an die Lötseite herangeführt werden.

Auf der Lötseite bildet die Induktorschleife den Auskoppelbereich aus. Die Induktorschleife kann in diesem Bereich eine halbe, eine ganze oder auch mehrere Windungen aufweisen, welche zur Auskopplung der Mittel- oder Hochfrequenz bestimmt sind. Der Auskoppelbereich der Induktorschleife kann dazu auf der Lötseite des Lötkopfes abschnittsweise parallel zu der Lötseite verlaufen.

Ein oder mehrere Distanzelemente ragen jedoch auf der Lötseite über die Induktorschleife hinaus, so dass der Lötkopf beim Aufsetzen auf eine ebene Oberfläche nur mit den Distanzelementen auf der Oberfläche aufsetzt und die Induktorspule keinen Kontakt mit der zu lötenden Oberfläche hat sondern einen geringen Abstand aufweist.

Der Grundkörpers besteht aus einem elektrisch nicht leitfähigen Material und weist auf der Lötseite eine oder vorzugsweise mehrere Distanzelemente auf, welche erfindungsgemäß außerhalb des Auskoppelbereiches angeordnet sind. Eine Distanzelement kann z.B. einfach stift- oder stabförmig ausgeführt sein, und eine punktförmige oder flächigen Aufsetzbereich aufweisen. Ebenso können ein oder mehrere Distanzelemente um den Auskoppelbereich herum verlaufen und diesen teilweise oder vollständig umschließen. Der Grundkörper kann beispielsweise einstückig mit den Distanzelementen ausgebildet sein. Die Distanzelemente können aber auch lösbar an dem Grundkörper befestigt sein und aus demselben oder einem anderen Material bestehen. Ebenso kann die Verbindung der Distanzelemente an dem Grundkörper einstellbar ausgeführt sein, zum Beispiel, in dem die Distanzelemente durch einschraubbare Elemente ausgeführt sind, so dass die effektive Länge der Distanzelemente eingestellt werden kann. Der Grundkörper kann Aussparungen zur Aufnahme sowohl des Zuleitungsbereiches als auch des Auskoppelbereiches der Induktorschleife aufweisen. Im Auskoppelbereich liegt die Induktorspule auf der Auskoppelseite erfindungsgemäß frei und ist nicht von dem Grundkörper eingefasst.

Der Grundkörper ist erfindungsgemäß mit einem Befestigungsmittel an der Induktorschleife befestigt. Die Befestigung kann im Auskoppelbereich der Induktorschleife erfolgen, bevorzugt erfolgt diese aber im Zuleitungsbereich. Das Bestigungsmittel kann zum Beispiel eine Platte und Schrauben umfassen, mit denen der Grundkörper auf den Zuleitungsbereich der Induktorschleife geklemmt wird, so dass eine lösbare und einstellbare Verbindung vorliegt. Ebenso kann der Grundkörper durch Kleben oder andere Mittel an der Induktorschleife befestigt werden. Ein induktiver Lötkopf umfasst in der Regel noch einen Flansch zur Ankopplung des Lötkopfes an eine Induktionslötvorrichtung. Der Grundkörper kann alternativ auch an diesem Flansch befestigt sein, der in diesem Sinne zum Zuleitungsbereich der Induktorschleife zu rechnen ist.

In einer ersten bevorzugten Ausführungsform weist die Induktorschleife eine U-förmige Grundform auf und zumindest eine erste Biegung beider Schenkel, welche den Zuleitungsbereich und den Auskoppelbereich trennt, wobei die beiden Schenkel im Zuleitungsbereich parallel zueinander in Richtung der Lötseite verlaufen, und im Auskoppelbereich ebenfalls parallel zueinander und parallel zu der Lötseite verlaufen. Die Induktorschleife weist in dieser Form also nur eine U-förmige Halbwindung auf, wobei der Zuleitungsbereich durch zwei parallel verlaufende Schenkel gebildet wird und die Schenkel im Bereich der Lötseite eine gemeinsame Biegung aufweisen und dann parallel zueinander und annähernd parallel zu der Lötseite verlaufen.

In einer weiteren bevorzugten Ausführungsform weist die Induktor-schleife eine zweite die Auskoppelzone abschließende Biegung auf, wobei die beiden Schenkel in dem sich anschließenden Bereich zuerst parallel von der Lötseite wegführend verlaufen und in einem anschließenden Bereich einen im wesentlichen halbkreisförmigen Abschluss der Induktorschleife ausbilden. Durch diese Form wird im Bereich der Auskoppelzone eine besonders homogene Feldverteilung der zu lötenden Stelle erreicht, die weitgehend unbeeinflusst von dem Abschluss der Induktorschleife ist, indem der Abschluss der Induktionsschleife nicht im Bereich der Lötseite liegt.

In einer weiteren bevorzugten Ausführungsform weist der Grundkörper wenigstens zwei Distanzelemente auf, welche auf der Lötseite beidseitig des Auskoppelbereich angeordnet sind

In einer weiteren bevorzugten Ausführungsform legen die Distanzelemente auf der Lötseite eine Aufsetzebene fest, wobei der Abstand der Induktorschleife von der Aufsetzebene im Auskoppelbereich zwischen 0,1 mm und 2 mm beträgt. Die Aufsetzebene kann dabei beispielsweise durch ein einziges Distanzelement mit einem flächigen Aufsetzbereich oder aber mehrere Distanzelemente festgelegt werden. Bei dem Abstand ist zu berücksichtigen, dass bei einem zu großen Abstand die Energie nicht effizient eingekoppelt werden kann. Bei einem zu geringen Abstand besteht die Gefahr des Kontaktes der Induktorschleife mit der Lötstelle, wodurch die Induktorschleife dejustiert oder verbogen werden kann. Mit einem Abstand der Induktorschleife von der Aufsetzebene im Auskoppelbereich zwischen 0,1 mm und 2 mm kann eine optimale Energieeinkopplung in die Lötstelle erreicht werden und eine optimales Lötergebnis erreicht werden. Bevorzugt beträgt der Abstand der Induktorschleife von der Aufsetzebene 0,2 mm bis 0,5 mm.

In einer weiteren bevorzugten Ausführungsform ist der Grundkörper mehrteilig ausgeführt, wobei ein erster Teil im Zuleitungsbereich mit den Befestigungsmitteln an der Induktorschleife fixiert ist und ein zweiter Teil das oder die Distanzelemente umfasst und wobei ferner Mittel zur relativen Positionierung des ersten Teils und des zweiten Teils vorhanden sind, wodurch der Abstand der Induktorschleife von der Aufsetzebene variabel einstellbar ist. Der erste Teil des Grundkörpers wird bevorzugt im Zuleitungsbereich an der Induktorschleife befestigt. Im einfachsten Fall kann der zweite Teil des Grundkörpers zum Beispiel lediglich das Distanzelement umfassen. Zum Beispiel kann es sich um ein schraubenartiges Element handeln, welches in den ersten Teil des Grundkörpers eingeschraubt wird, wodurch die effektiv wirksame Länge des Distanzelementes und damit der Abstand der Induktorschleife von der Aufsetzebene variabel einstellbar ist. Ebenso kann der zweite Teil des Grundkörpers aber auch mehrere Distanzelemente umfassen und als Gesamteinheit relativ zum ersten Teil des Grundkörpers positionierbar sein.

In einer weiteren bevorzugten Ausführungsform ist die Induktorschleife aus einem versilberten oder vergoldeten Kupferrohr besteht, welches durch eine Kühlflüssigkeit gekühlt werden kann. Aufgrund des Skineffektes kann die Leitfähigkeit der Induktorspule durch die Edelmetall-Beschichtung deutlich angehoben werden. Die Kühlung der Induktorschleife kann zum Beispiel mit Wasser als Kühlflüssigkeit erfolgen.

In einer weiteren bevorzugten Ausführungsform weist der Lötkopf einen Flansch auf, über den eine lösbare Verbindung der Induktorspule mit einem Hochfrequenzgenerator bzw. einem Mittelfrequenzgenerator sowie der Kühlmittelversorgung herstellbar ist. Dadurch kann der Lötkopf einfach montiert und demontiert werden.

In einer weiteren bevorzugten Ausführungsform besteht der Grundkörper zumindest teilweise aus einem faserverstärkten, hochtemperaturfesten Kunststoff. Der Grundkörper ist hohen mechanischen und thermischen Belastungen ausgesetzt. Insbesondere darf er bei häufigem Aufsetzen nur wenig Abrieb aufweisen und muss aus einem elektrisch nicht leitfähigen Material bestehen, damit er sich durch das elektromagnetische Feld nicht erwärmt, und dieses auch nicht störend beeinflusst. Optimaler, wartungsfreier Dauerbetrieb wurde mit einem Grundkörper aus einem faserverstärkten, hochtemperaturfesten Kunststoff erreicht, welcher die notwendigen Eigenschaften hervorragend erfüllt.

Die Erfindung umfasst auch ein Verfahren zum Anlöten eines Kontaktbandes auf der Elektrodenschicht einer Solarzelle, wobei das erfindungsgemäße Verfahren die folgenden Verfahrenschritte umfasst:
- die Bereitstellung der Solarzelle und des Kontaktbandes,
- die Positionierung des Kontaktbandes auf der zu lötenden Stelle,
- das Aufsetzen des Lötkopfes gemäß Anspruch 1,
- eine Lötphase, in welcher der Lötbereich induktiv erwärmt und gelötet wird
- eine Abkühlphase, in welcher das Lot erstarrt
- das Zurückfahren des Lötkopfes
In dem ersten Schritt werden die Solarzelle und das Kontaktband bereitgestellt. Bei der Solarzelle kann es sich zum Beispiel um eine kristalline Solarzelle auf Basis eines Halbleiterwafers handeln. Im folgenden wird beispielhaft der Fall des Rohmoduls einer Dünnschichtsolarzelle beschrieben, welches rückseitig eine Rückelektrodenschicht aufweist. In der Regel ist ein Rohmodul durch Trennlinien in Teilzellen unterteilt, welche in Serie geschaltet sind. Des Weiteren werden in der Regel jeweils eine bestimmte Anzahl von in Serie geschalteten Teilzellen zu einem Teilmodul zusammengeschaltet, d.h. das Kontaktband wird jeweils auf der erste und der letzten Zelle eines Teilmoduls mit dem Kontaktband angelötet. Bei dem Kontaktband kann es sich zum Beispiel um ein dünnes Kuperband handeln, welches in der Regel mit einem Lot vorverzinnt ist. In der Regel ist die zu lötende Stelle auf dem Kontaktband außerdem mit Flussmittel versehen. In einem zweiten Prozessschritt wird das Kontaktband entlang der Abgriffzellen positioniert. In einem dritten Prozessschritt wird der Lötkopf gemäß Hauptanspruch auf die zu lötende Stelle aufgesetzt. Nach Absetzen des Lötkopfes wird der Lötbereich in der eigentlichen Lötphase induktiv erwärmt, so dass es zu einem Aufschmelzen des Lotes und einer Lötverbindung des Kontaktbandes an die Rückelektrodenschicht kommt. Es schließt sich eine Abkühlphase an, in welcher keine dem Lötkopf weniger oder keine Wechselstrom mehr zugeführt wird, so dass die Lötstelle abkühlt und das Lot erstarrt. Anschließend wird der Lötkopf zurückgefahren. Die Befestigung des Kontaktbändchens auf der Rückelektrodenschicht erfolgt in der Regel in der beschriebenen Art und Weise an typischerweise 10 bis 20 oder mehr Lötpunkten, welche gleichmäßig über die Länge der Abgriffzellen angeordnet sind. Ebenso können jeweils zwei Lötpunkte direkt nebeneinander vorgesehen sein, um Redundanz für den Ausfall einer Lötstelle zu schaffen. Es erfolgt also mit dem beschriebenen Verfahren keine durchgehende Lötverbindung zwischen dem Kontaktbänchden und der Rückelektrodenschicht.

In einer ersten bevorzugten Ausführungsform des Verfahrens weist der Lötkopf mindestens zwei Distanzelemente beidseitig des Auskoppelbereiches auf und wird mit mindestens zwei Distanzelementen beidseitig des Lötbereiches auf das Kontaktband aufgesetzt, so dass das Kontaktband in der Lötphase beidseitig des Lötbereiches niedergehalten wird. In dieser bevorzugten Ausführungsform dienen die Distanzelemente also gleichzeitig als Niederhalter des Kontaktbandes.

In einer weiteren bevorzugten Ausführungsform des Verfahrens beträgt der Abstand der Induktorschleife von dem Kontaktband zwischen 0,1 mm und 1 mm, bevorzugt zwischen 0,2 mm und 0,5 mm.

In einer weiteren bevorzugten Ausführungsform des Verfahrens wird unmittelbar nach Aufsetzen des Lötkopfes über eine Zeitdauer von 0,2 s bis 2 s eine konstante Leistung induktiv eingekoppelt, und direkt nach Beendigung der Energieeinkopplung der Lötkopf hochgefahren. Erstaunlicherweise hat sich gezeigt, dass auf eine Abkühlphase bei passender Lötzeit vollständig verzichtet werden kann, d.h. nach Abschluss der Lötphase einer vorgegebenen Zeitdauer wird die induktiv eingekoppelte Leistung ausgeschaltet und zeitgleich wird der Lötkopf hochgefahren.

In einer weiteren bevorzugten Ausführungsform des Verfahrens wird dem Lötkopf in der Lötphase eine Leistung von 1 kW bis 5 kW und einer Frequenz aus dem Bereich von 0,1 MHz bis 10 MHz zugeführt.

In einer weiteren bevorzugten Ausführungsform des Verfahrens erfolgt kein Vorheizschritt der Solarzelle. Während bei Lötverfahren aus dem Stand der Technik häufig ein Vorheizschritte der Solarzelle vorgesehen ist, um die Lötzeit zu reduzieren, kann das erfindungsgemäße Verfahren ohne ein Vorheizen der Solarzelle erfolgen. Das bedeutet, dass sich die Solarzelle in dem erfindungsgemäßen Verfahren vor dem Lötprozess im Wesentlichen auf Umgebungstemperatur befinden kann.

In einer weiteren bevorzugten Ausführungsform des Verfahrens handelt es sich bei dem Kontaktband um ein verzinntes Kupferband mit einer Breite von 0,5 mm bis 10 mm und einer Dicke von 50 µm bis 500 µm.

In einer weiteren bevorzugten Ausführungsform des Verfahrens ist das Kupferband mit einem Lot mit einem Pb-Gehalt von weniger als 0,1 Gew.-% Pb mit einer Schichtdicke von 5 µm bis 50 µm verzinnt. Bleiarme oder bleifreie Lote mit weniger als 0,1 Gew.-% Pb zeichnen sich in der Regel durch höhere Schmelztemperaturen sowie schlechtere Fließeigenschaften aus. Mit dem erfindungsgemäßen Verfahren können neben Kontaktbändern mit bleihaltigen Standardloten überraschenderweise auch Kontaktbänder mit Loten mit einem Pb-Gehalt von weniger als 0,1 Gew.-% Pb erfolgreich auf einer Rückelektrodenschicht eines Dünnschichtrohmoduls angelötet werden. Selbstverständlich ist das Verfahren ebenso für einen Lötprozess mit einem Pb-Gehalt von mehr als 0,1 Gew.-% Pb erfolgreich einsetzbar.

In einer weiteren bevorzugten Ausführungsform des Verfahrens handelt es sich bei der Solarzelle um eine Dünnschichtsolarzelle wobei es sich vorzugsweise um eine Si-basierte Dünnschichtsolarzelle handelt. Unter Dünnschichtsolarzelle ist hierbei ein Rohmodul zu verstehen, welches insbesondere noch keine Rückseitenverkapselung aufweist.

In einer weiteren bevorzugten Ausführungsform des Verfahrens weist das rückseitige Schichtsystem der Dünnschichtsolarzelle eine Ag-, Al- oder Cu-haltige Reflektorschicht einer Schichtdicke von 100 nm bis 1 µm sowie eine Sn, Cu oder Ag-haltige Kontaktschicht einer Schichtdicke von 10 nm bis 200 nm auf. Die Ag-, Al- oder Cu-haltige Reflektorschicht wirkt dabei zum einen als Reflektor aber auch als Rückelektrodenschicht der Dünnschichtsolarzelle. Ag, Al und Cu zeichnen sich durch die erforderlichen hohe Reflektion, sowie elektrische Leitfähigkeit aus. Ebenso kann die Reflektorschicht mehrere Ag-, Al- oder Cu-haltige Einzelschichten umfassen. Die Kontaktschicht stellt schließlich eine lötbare Schicht dar, auf welche das Kontaktbändchen angelötet werden kann.

In einer weiteren bevorzugten Ausführungsform des Verfahrens ist zwischen Reflektorschicht und Kontaktschicht keine weitere Schicht angeordnet. Im Allgemeinen kann zwischen der Ag-, Al- oder Cu-haltigen Reflektorschicht und der Kontaktschicht noch eine Sperrschicht einer Dicke von 2 nm bis 500 nm angeordnet sein. Die Sperrschicht ist aus einer metallischen Legierung gebildet, die nicht mit der Kontaktschicht oder der Reflektorschicht legiert. Sie trägt zur Vermeidung von Durchlötern bei und verhindert Schädigungen des Reflektors bei dem Lötprozess. Sie kann zum Beispiel aus einer NiV-Legierung bestehen. Überraschenderweise kann mit dem erfindungsgemäßen Lötverfahren jedoch auf eine Sperrschicht verzichtet werden, und es treten auch ohne Sperrschicht keine Durchlöter auf.

In einer weiteren bevorzugten Ausführungsform des Verfahrens handelt es sich bei der Solarzelle um eine kristalline Solarzelle auf der Basis eines Halbleiterwafers. Kristalline Solarzelle auf der Basis eines Halbleiterwafers weisen in der Regel eine flächige Rückelektrodenschicht sowie eine nicht flächige aufgedruckte Frontelektrode auf der Vorderseite auf. Bei der Verschaltung mehrerer solcher Solarzellen werden jeweils mehrere Solarzellen in Serie zu Teilmodulen verschaltet, wobei die Rückseite einer Solarzelle jeweils mit der Vorderseite der nächsten Solarzelle durch ein Kontaktband verbunden wird. Mit dem erfindungsgemäßen Verfahren kann das Kontaktband sowohl auf der Vorderseite einer Solarzelle auf der Basis eines Halbleiterwafers sowie auf deren Rückseite erfolgen.

Ausführungsbeispiele:

Die Erfindung wird im Folgenden anhand von Ausführungsbeispielen, die in den Figuren schematisch dargestellt sind, erläutert. Dabei zeigen:

Figur 1: Schnittbild eines erfindungsgemäßen aufgesetzten Lötkopfes senkrecht zum Kontaktbändchen

Figur 2: Frontansicht eines erfindungsgemäßen aufgesetzten Lötkopfes parallel zum Kontaktbändchen

Figur 3: Perspektivische Ansicht eines erfindungsgemäßen Lötkopfes mit Flansch

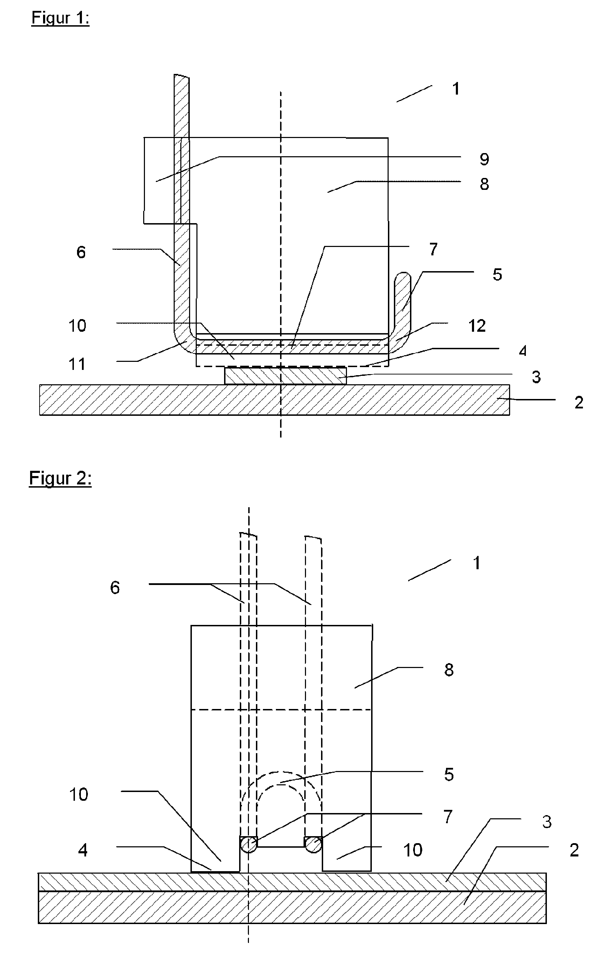

Figur 1 zeigt ein Schnittbild eines erfindungsgemäßen Lötkopfes (1), welcher mit einem Distanzelement (10), welches sich auf der Lötseite (4) des Lötkopfes (1) befindet, auf ein Kontaktbändchen (3) aufgesetzt ist, welches auf einer Solarzelle (2) aufliegt. Der Lötkopf umfasst eine U-förmige Induktorschleife (5), welche durch eine erste Biegung (11) und eine zweite Biegung (12) in einen Zuleitungsbereich (6), einen Auskoppelbereich (7) und schließlich einen Endbereich unterteilt ist. Der Lötkopf umfasst ferner einen Grundkörper (8) welcher über Befestigungsmittel (9) an dem Zuleitungsbereich (6) der Induktorschleife (5) befestigt ist. Es ist der Fall dargestellt, dass der Lötkopf (1) mit den Distanzelementen (10) auf das Kontakbändchen abgesetzt ist und die Distanzelemente das Kontaktbändchen niederhalten.

Figur 2 zeigt ein weiteres Schnittbild des Lötkopfes aus Figur 1 in der in Figur 1 eingezeichneten Schnittebene. In diesem Schnitt sind ergänzend zu den bereits in Figur 1 beschriebenen Elementen deutlich die beidseitig des Auskoppelbereiches (7) angeordneten Distanzelemente (10) zu erkennen, der Zuleitungsbereich (6) sowie der Endbereich der Induktorschleife (5), in welchem die Induktorspule geschlossen ist. In dem dargestellten Lötkopf ist der Grundkörper (8) einstückig mit den Distanzelementen (10) ausgeführt und weist auf der der Solarzelle (2) zugewandten Lötseite (4) Vertiefungen auf, welche geeignet sind, den Auskoppelbereich (7) der Induktorschleife (5) aufzunehmen.

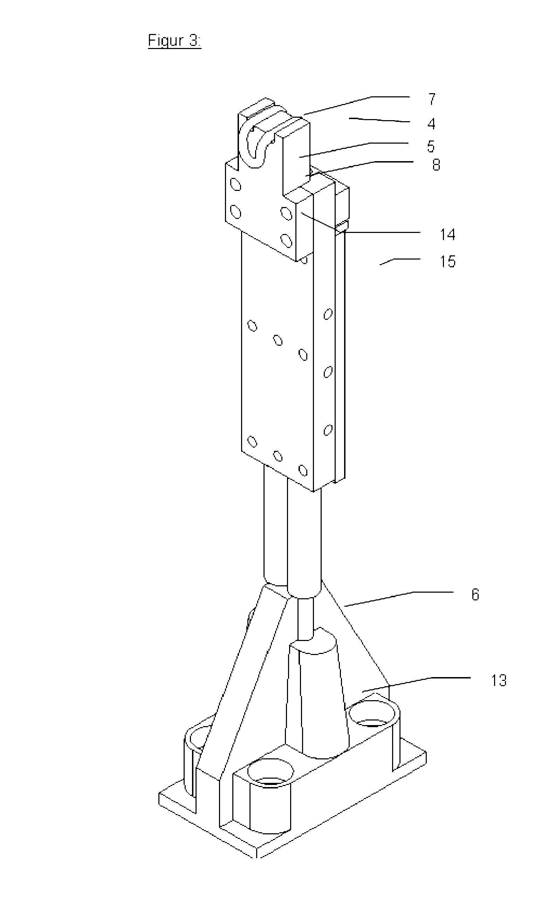

Figur 3 zeigt eine perspektivische Ansicht eines erfindungsgemäßen Lötkopfes (1) einschließlich eines Flansches (13) zur lösbaren Ankopplung an eine Induktions-Lötvorrichtung. In der dargestellten Ausführungsform ist der Grundkörper (8) mehrteilig ausgeführt und mit einem ersten Teil (15) an dem Zuleitungsbereich der Induktorschleife (6) befestigt, während ein zweiter Teil (14) relativ zu diesem ersten Teil verfahrbar angeordnet ist. Die Teile 14 und 15 können zum Beispiel schlittenartig miteinander verbunden sein, also durch eine eindimensionale Verfahreinheit, wobei die genaue relative Position durch Stellschrauben präzise einstellbar ist. Ebenso können die Teile (14, 15) aber durch eine oder mehrere Schraubverbindungen miteinander verbunden sein, wobei ein Teil Langlöcher aufweist, welche eine eindimensionale Verschiebbarkeit gewährleisten. Die Distanzelemente (10) sind einstückig mit dem Teil (14) des Grundkörpers ausgebildet, so dass durch die relative Verstellung der Teile (14, 15) der Auskoppelbereich der Abstand der Induktorschleife (7) relativ zu der durch die Distanzelemente definierten Lötebene variabel ist. In dem dargestellten Beispiel ist ferner der Teil (14) des Grundkörpers aus konstruktiven Gründen ebenfalls 2-stückig ausgeführt, wobei diese beiden Teile jedoch fest miteinander verbunden sind.

Mit dem erfindungsgemäßen Lötkopf und dem erfindungsgemäßen Lötverfahren wird ein Lötkopf für eine Induktionslötvorrichtung zum induktiven Löten eines metallischen Kontaktbandes auf ein Dünnschichtsolarmodul bereitgestellt, welcher eine zuverlässige mechanische und elektrische Lötverbindung sicherstellt, ohne jedoch die Halbleiterschicht und die Frontelektrode zu schädigen, und welche einen schnellen, reproduzierbaren und unter Dauerbetrieb stabilen Lötprozess sicherstellt.

Ein erfindungsgemäßer Lötkopf wurde zum Beispiel zum Anlöten von verzinnten Kontaktbändern aus Kupfer einer Dicke von 50 µm bis 500 µm und einer Breite von 2 mm bis 5 mm auf amorphen Si-Dünnschicht-Rohmodulen erfolgreich eingesetzt. Die Dünnschicht-Rohmodule wiesen einen Aufbau der Rückelektrode auf, der neben einer Ag-Reflektorschicht eine NiV-Schicht aufweist, welche Durchlötern zusätzlich entgegenwirkt. Es wurden HF-Generatoren einer Frequenz von 800 kHz und einer Leistung von ca. 2 kW eingesetzt. Bei einem Abstand der Induktorspule von den Kontaktbändern von ca. 0,4 mm wurden sehr kurze Lötzeiten von 0,5 Sekunden erreicht. Durchlöter konnten ebenso wie fehlerhafte Lötstellen nach entsprechender Optimierung der Lötzeiten auf das vorliegenden System zuverlässig vermieden werden.

Mit Lötköpfen gemäß Stand der Technik traten konnte hingegen auch bei größeren Lötzeiten von mehr als einer Sekunde immer wieder Durchlöter auf sowie "kalte" nicht belastbare Lötstellen, so dass die erforderliche Prozessstabilität nicht erreicht worden ist.

Als Maß für die Qualität der Lötung wurde eine Abreißprüfung vorgenommen, wobei das einseitig angelötete Kontaktband senkrecht von der Solarzelle abgezogen wurde und die Kraft bestimmt wurde, bei dem es zu einem Versagen der Lötstelle kommt. Erfahrungsgemäß ist eine Abreißkraft von mindestens 2 N notwendig, um sicherzustellen, dass eine ausreichend guter elektrischer Kontakt besteht und das Kontaktbändchen beim Auflaminieren eine Rückseite nicht abreißen kann. Die Abreißkräfte lagen mit dem erfindungsgemäßen Lötverfahren etwa im Bereich von 10 N mit geringer Schwankungsbreite und stabil über 5 N. Eine Analyse der abgerissenen Bändchen zeigte, dass das Versagen häufig nicht durch die Lötstelle sondern innerhalb des Schichtsystems erfolgte, die Lötstelle also eine größere Festigkeit als das Schichtsystem aufweist. Der Lötkopf konnte ohne Verschleißprobleme und Verunreinigungsprobleme im Dauerbetrieb eingesetzt werden.

Bei Verwendung eines induktiven Lötkopfes aus dem Stand der Technik, welcher ähnlich dem erfindungsgemäßen Lötkopf eine Induktorschleife aufweist und mit einem dünnen Keramikplättchen auf das Kontaktband aufgesetzt wird, konnten vergleichsweise bei sonst gleichen Bedingungen bzgl. der Lötvorrichtung und dem zu lötenden System Kontaktband/Solarzelle lediglich Lötzeiten von 1,2 bis 1,4 Sekunden erreicht werden. Durchlöter konnten nicht zuverlässig vermieden werden. Des Weiteren besaß der Lötkopf eine deutlich geringere Standzeit.

Selbstverständlich können in einer Vorrichtung auch mehrere erfindungsgemäße Lötköpfe verwendet werden, so dass jeweils mehrere Lötstellen parallel gelötet werden können. Auf einem Rohmodul einer Dünnschichtsolarzelle werden beispielsweise mindestens 2 Kontaktbänder angelötet, welche parallel zueinander verlaufen. Jedes Kontaktband ist mit einer Anzahl von ca. 20 Punktlötungen auf der Rückelektrode befestigt. Bevorzugt wird jedem Kontaktband beispielsweise ein Lötkopf zugeordnet.

Das erfindungsgemäße Lötverfahren kann nicht nur zum Anlöten der Kontaktbändchen auf der Rückelektrodenschicht einer Dünnschichtsolarzelle eingesetzt werden, wodurch jeweils die erste und die letzte Teilzelle eines Teilmodules kontaktiert werden, sondern ebenso zum Anlöten der so genannten Querverbinder auf den Kontaktbändchen, welche bereits auf der Dünnschichtsolarzelle angelötet sind. Das Auflöten der Querverbinder zur Parallel-Verschaltung der Teilmodule eines Dünnschichtsolarmoduls ist notwendig, sofern das Dünnschichtsolarmodul elektrisch in mehrere Teilmodule unterteilt ist. Die Querverbinder weisen bevorzugt denselben Aufbau wie die Kontaktbänder auf und bestehen beispielsweise aus einem verzinnten Kupferbändchen. Die Querverbinder werden zum Verlöten mit den Kontaktbändchen auf diesen positioniert und der erfindungsgemäße Lötkopf wird mit den vorstehenden Distanzelementen so aufgesetzt, dass der Querverbinder auf dem Kontaktbändchen niedergehalten wird. Anschließen kann der eigentliche Lötprozess erfolgen, wobei dem Lötkopf die HF-Energie zugeführt wird und der Querverbinder mit dem Kontaktbändchen verlötet wird. Die Querverbinder können sowohl in einem Bereich an ein Kontaktbändchen gelötet werden, in dem dieses bereits mit der Rückelektrodenschicht verlötet ist, als auch in einem Bereich, in dem das Kontaktbändchen nicht mit der Rückelektrodenschicht verlötet ist.

### Bezugszeichenliste

- 1: Lötkopf
- 2: Solarzelle
- 3: Kontaktband
- 4: Lötseite
- 5: Induktorschleife
- 6: Zuleitungsbereich der Induktorschleife
- 7: Auskoppelbereich der Induktorschleife
- 8: Grundkörper
- 9: Befestigungsmittel
- 10: Distanzelement
- 11: Erste Biegung der Induktorschleife
- 12: Zweite Biegung der Induktorschleife
- 13: Flansch
- 14: Teil des Grundkörpers
- 15: weiterer Teil des Grundkörpers

## Patentansprüche

1. Lötkopf für eine Induktionslötvorrichtung umfassend eine Lötseite, mit welcher der Lötkopf während des Lötprozesses auf die zu lötende Stelle aufgesetzt wird, eine Induktorschleife mit einem Zuleitungsbereich und einem auf der Lötseite angeordneten Auskoppelbereich, einen Grundkörper aus einem elektrisch nicht leitfähigen Material und ein Befestigungsmittel, mit welchem der Grundkörper an der Induktorschleife fixiert ist,
**dadurch gekennzeichnet, dass** der Auskoppelbereich der Induktorschleife auf der Lötseite frei liegt und dass der Grundkörper auf der Lötseite ein oder mehrere Distanzelemente aufweist, welche außerhalb des Auskoppelbereiches angeordnet sind und über den Auskoppelbereich der Induktorschleife hinausragen.

2. Lötkopf nach Anspruch 1, wobei die Induktorschleife eine U-förmige Grundform aufweist und zumindest eine erste Biegung beider Schenkel aufweist, welche den Zuleitungsbereich und den Auskoppelbereich trennt, wobei die beiden Schenkel im Zuleitungsbereich parallel zueinander in Richtung der Lötseite verlaufen, und im Auskoppelbereich ebenfalls parallel zueinander und parallel zu der Lötseite verlaufen.

3. Lötkopf wenigstens nach Anspruch 2, wobei die Induktorschleife eine zweite die Auskoppelzone abschließende Biegung aufweist, wobei die beiden Schenkel in dem sich anschließenden Bereich zuerst parallel von der Lötseite wegführend verlaufen und in einem anschließenden Bereich einen im wesentlichen halbkreisförmigen Abschluss der Induktorschleife ausbilden.

4. Lötkopf wenigstens nach Anspruch 1, wobei der Grundkörper wenigstens zwei Distanzelemente aufweist, welche auf der Lötseite beidseitig des Auskoppelbereiches angeordnet sind.

5. Lötkopf wenigstens nach Anspruch 4, wobei die Distanzelemente auf der Lötseite eine Aufsetzebene festlegen und wobei der Abstand der Induktorschleife von der Aufsetzebene im Auskoppelbereich zwischen 0,1 mm und 2 mm beträgt.

6. Lötkopf wenigstens nach Anspruch 4, wobei der Grundkörper mehrteilig ausgeführt ist, wobei ein erster Teil im Zuleitungsbereich mit den Befestigungsmitteln an der Induktorschleife fixiert ist und wobei ein zweiter Teil das oder die Distanzelemente umfasst und wobei ferner Mittel zur relativen Positionierung des ersten Teils und des zweiten Teils vorhanden sind, wodurch der Abstand der Induktorschleife von der Aufsetzebene variabel einstellbar ist.

7. Lötkopf wenigstens nach Anspruch 1, wobei die Induktorschleife aus einem versilberten oder vergoldeten Kupferrohr besteht, welches durch eine Kühlflüssigkeit gekühlt werden kann.

8. Lötkopf wenigstens nach Anspruch 1, wobei der Lötkopf einen Flansch aufweist, über den eine lösbare Verbindung der Induktorspule mit einem Hochfrequenzgenerator sowie der Kühlmittelversorgung herstellbar ist.

9. Lötkopf wenigstens nach Anspruch 1, wobei der Grundkörper zumindest teilweise aus einem faserverstärkten, hochtemperaturfesten Kunststoff besteht.

10. Verfahren zum Anlöten eines Kontaktbandes auf einer Solarzelle, umfassend
- die Bereitstellung einer Solarzelle und eines Kontaktbandes,
- die Positionierung des Kontaktbandes auf der zu lötenden Stelle,
- das Aufsetzen eines Lötkopfes mit den Merkmalen gemäß Anspruch 1,
- eine Lötphase, in welcher der Lötbereich induktiv erwärmt und gelötet wird
- eine Abkühlphase, in welcher das Lot erstarrt
- das Zurückfahren des Lötkopfes

11. Verfahren wenigstens nach Anspruch 10, wobei der Lötkopf mindestens zwei Distanzelemente beidseitig des Auskoppelbereiches aufweist und mit den Distanzelementen auf das Kontaktband aufgesetzt wird, so dass das Kontaktband in der Lötphase beidseitig des Lötbereiches niedergehalten wird.

12. Verfahren wenigstens nach Anspruch 10, wobei der Abstand der Induktorschleife von dem Kontaktband zwischen 0,1 mm und 1 mm, bevorzugt zwischen 0,2 mm und 0,5 mm beträgt.

13. Verfahren wenigstens nach Anspruch 10, wobei unmittelbar nach Aufsetzen des Lötkopfes über eine Zeitdauer von 0,2 s bis 2 s eine konstante HF-Leistung eingekoppelt wird, und direkt nach Beendigung der Energieeinkopplung der Lötkopf hochgefahren wird.

14. Verfahren wenigstens nach Anspruch 10, wobei dem Lötkopf in der Lötphase HF-Energie einer Leistung von 1 kW bis 5 kW und einer Frequenz aus dem Bereich von 0,1 MHz bis 10 MHz zugeführt wird.

15. Verfahren wenigstens nach Anspruch 10, wobei kein Vorheizschritt der Solarzelle erfolgt.

16. Verfahren wenigstens nach Anspruch 10, wobei es sich bei dem Kontaktband um ein verzinntes Kupferband mit einer Breite von 0,5 mm bis 10,0 mm und einer Dicke von 50 µm bis 500 µm handelt.

17. Verfahren wenigstens nach Anspruch 10, wobei das Kupferband mit einem Lot mit einem Pb-Anteil von weniger als 0,1 Gew.-% Pb mit einer Schichtdicke von 5 µm bis 50 µm verzinnt ist.

18. Verfahren wenigstens nach Anspruch 10, wobei es sich bei der Solarzelle um eine Dünnschichtsolarzelle handelt, vorzugsweise um eine Si-basierte Dünnschichtsolarzelle.

19. Verfahren wenigstens nach Anspruch 10, wobei das rückseitige Schichtsystem der Dünnschichtsolarzelle eine Ag, Al oder Cu-haltige Reflektorschicht einer Schichtdicke von 100 nm bis 1 µm, sowie eine Sn, Cu oder Ag-haltige Kontaktschicht einer Schichtdicke von 10 nm bis 200 nm aufweist.

20. Verfahren wenigstens nach Anspruch 19, wobei zwischen Reflektorschicht und Kontaktschicht keine weiteren Schicht angeordnet ist.

21. Verfahren wenigstens nach Anspruch 10, wobei es sich bei der Solarzelle um eine kristalline Si-Solarzelle auf der Basis eines Halbleiterwafers handelt.
